# EUROPEAN PATENT SPECIFICATION

(11) **EP 2 307 782 B1**
(45) Date of publication and mention of the grant of the patent: **15.08.2012**
(21) Application number: 09787771.6
(22) Date of filing: 03.07.2009
(51) Int. Cl.: F16L 37/12

(54) **SYSTEM FOR THE LEAKTIGHT CONNECTION OF VALVE UNITS TO RESPECTIVE PIPES, IN PARTICULAR FOR USE WITH COMBUSTIBLE GASES**
SYSTEM ZUR DICHTEN VERBINDUNG VON VENTILEINHEITEN ZU DEN ENTSPRECHENDEN ROHREN, IM BESONDEREN ZUR VERWENDUNG FÜR BRENNGASE
SYSTÈME DE RACCORDEMENT ÉTANCHE D ENSEMBLES VANNE À LEUR CONDUIT RESPECTIF, EN PARTICULIER DESTINÉ À ÊTRE UTILISÉ AVEC DES GAZ COMBUSTIBLES

(30) Priority: 08.07.2008 IT PD20080201
(43) Date of publication of application: 13.04.2011
(73) Proprietor: Sit la Precisa S.p.a., 35129 Padova (IT)
(72) Inventor: BENVENUTO, Michele, I-31021 Mogliano Veneto (TV) (IT); DE IULIO, Davide, I-35010 Perarolo Di Vigonza (PD) (IT); PERON, Luca, I-35010 Borgoricco (PD) (IT); ZANELLA, Stefano, I-31044 Montebelluna (TV) (IT); BUCCI, Marco, I-35043 Monselice (PD) (IT)
(74) Representative: Fabris, Stefano
(86) International application number: PCT/IT2009/000295
(87) International publication number: WO 2010/004604

(56) References cited:
- DE-A1- 3 739 626
- US-A- 3 479 069

## Description

### Technical field

The present invention concerns a system for the leaktight connection of valve units to respective pipes, according to the characteristics mentioned in the preamble of the main claim.

### Technological background

The invention lies particularly, but not exclusively, in the specific field of systems for the leaktight connection of valve units arranged for delivering combustible gas to burners of heating apparatuses, such as boilers, fireplaces or the like.

In this field, in order to connect the valve unit to the gas pipes, it is known to arrange in the body of the unit itself respective threaded male attachment elements, which can be connected to the respective pipes by pipe-fixing ring-nut means, screwed onto the attachment in a manner such as to retain an end of the pipe in a gas-tight manner on the body of the valve unit. A typical solution provides for the attachment element to be provided at its free end with a front surface which can be coupled to one end, preferably with countersunk profile, of the corresponding pipe, in order to ensure a gas-tight seal in the coupling of such surfaces as a result of the clamping, by screwing, of the ring-nut on the threaded spigot of the attachment element. An example of such a connection system is described in Italian Patent Application No. PD2006A000080 in the name of the Applicant.

Systems for leaktight connection, in particular between tubular sections of pipes, are also known in which the axial retention between the sections is obtained by the action of resilient retaining elements, such as wire clips or similar devices, which can be releasably connected between the tubular sections and which act between same in order to ensure mutual gas-tight axial clamping between the coupling tubular sections.

An example of such a system is known from DE 3739626

Such systems prove effective owing to the ease and rapidity of use, as well as the fact that they result in structural simplifications, in terms of overall dimensions and number of parts required for the connection.

### Description of the invention

A principal aim of the invention is that of providing a system for the leaktight connection of valve units to respective pipes which permits gas-tight connection, on the same valve body, to different types of pipes, and in particular which permits, as an alternative, leaktight connection both to clamping means with threaded ring-nut and to connecting means having releasable resilient retaining elements, thus widening the range of possible connections provided in the installation stages with the same valve unit.

These and other aims which will become clearer hereinafter are achieved by means of a system for leaktight connection produced according to the following claims.

### Brief description of the drawings

Further characteristics and advantages of the invention will become clearer from the following detailed description of a preferred exemplary embodiment thereof, illustrated by way of non-limiting example with reference to the appended drawings, in which:
- Figure 1 is a perspective view of a valve unit connected to a pipe in a leaktight manner according to the connection system of the invention,
- Figure 2 is a perspective, exploded, view of the connection system of the preceding Figure,
- Figure 3 is a front view of the valve unit of Figure 1, in which the connection system is in the coupled state,
- Figure 4 is a view in section along the line IV-IV of Figure 3,
- Figure 5 is a view in section along the line V-V of Figure 3,
- Figure 6 is a schematic sectional view of a valve unit operating with the connection system of the invention, used in a leaktight connection of known type to a pipe,
- Figure 7 is a view corresponding to that of Figure 5 in an alternative embodiment of the invention.

### Preferred exemplary embodiments of the invention

With reference to the drawings mentioned, the reference 1 designates as a whole a valve unit, shown only partially, arranged to be connected to a pipe 2, according to a system for leaktight connection provided according to the present invention. The pipe may form the supply pipe or delivery pipe for the gas relative to the valve unit. Provision may also be made for both the supply pipe and the delivery pipe for the gas to be arranged to be connected in a leaktight manner to the body 1a of the valve unit by means of the system of the invention. A description will therefore now be given of the connection system with reference only to the pipe 2, within the limits of the aforesaid explanation.

Said tube is connected to the valve unit in the region of an attachment provided on the body 1a of the valve unit. Said attachment is of the threaded engagement type and comprises a male attachment element 3, formed integrally with the valve body 1a and projecting axially therefrom, as shown in the drawings. More particularly, the threaded attachment element 3 is cylindrical in shape and has an axial cavity 4, in the form of a cylindrical through bore, intended to place the pipe 2 in flow communication with the gas through-flow inside the valve unit. The through cavity 4 is coaxial with the cylindrical threaded attachment 3, with X indicating the direction of their axial extension.

The attachment element, starting from the valve body 1a, comprises a first portion including a groove 5, extending for at least part of its circumferential profile, and a second cylindrical portion, in prolongation of the first portion, and on which the external thread of the attachment is provided. At the free end of the attachment an annular front surface 6 is defined.

In the groove 5, in a position adjacent to the threaded portion of the attachment, a shoulder surface 5a is defined, the function of which will become clear from the continuation of the description.

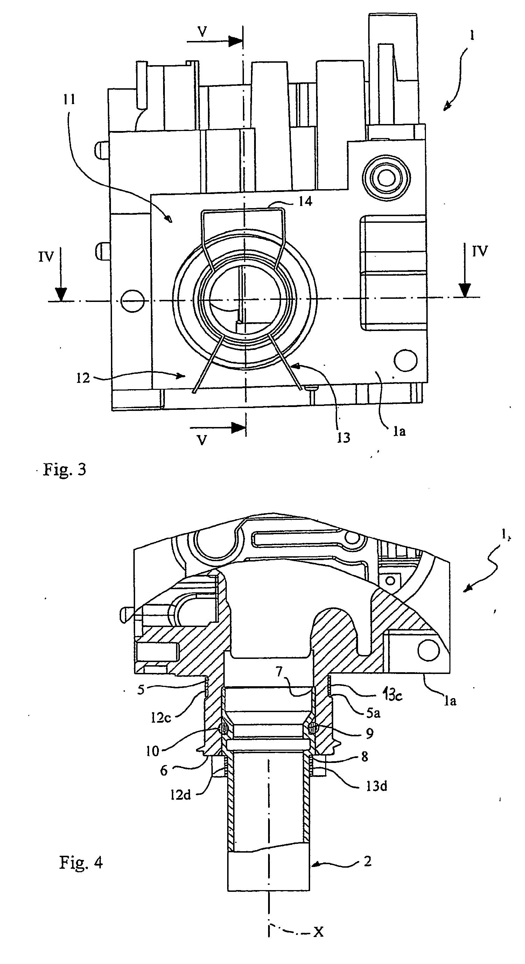

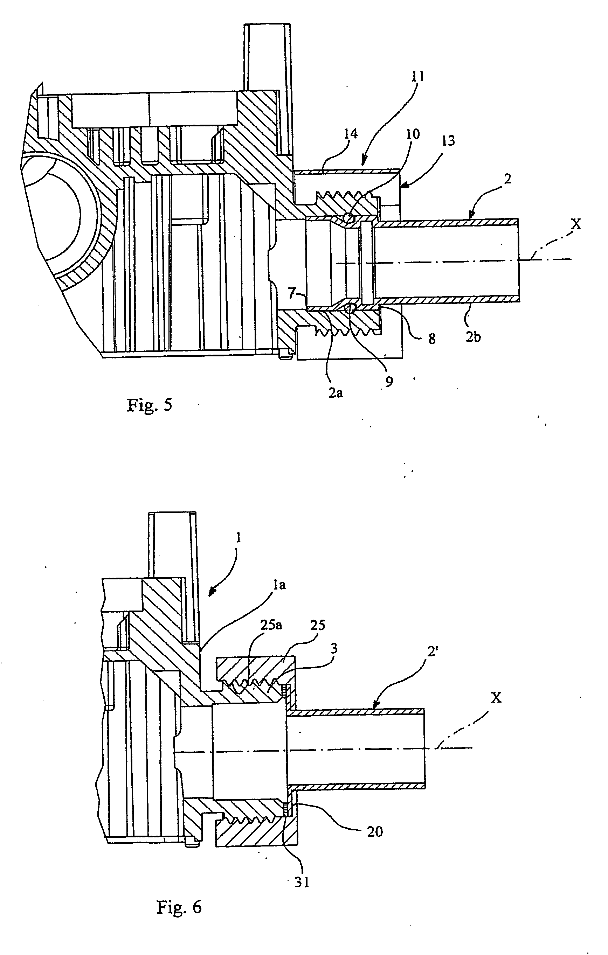

A further radial shoulder surface, indicated by 7, is provided inside the axial cavity 4 and is defined, in the direction of the free end of the attachment, between a first axial part of the cylindrical cavity 4 and a second axial part of the cavity, adjacent to the first part and having a larger diameter than said first part, as is clearly shown in Figures 4 and 5.

Correspondingly, the pipe 2 comprises in its outer cylindrical surface, in the region of the end connectible to the valve unit, a shoulder surface 8. The radial shoulder is defined between a first axial pipe portion 2a, extending from the free end of the pipe itself, and a second axial portion 2b of the pipe, adjacent to the first portion and having a smaller diameter than the first portion. In the first pipe portion 2a a circumferential seat 9 is also provided, intended to house a sealing ring 10, for example of the O-ring type, in order to ensure gas-tightness in contact with the inner surface of the axial cavity 4, following the connection by engagement of the pipe 2 in the cavity itself.

The connection system also comprises a retaining element, indicated as a whole by 11, which can be restrained axially, and releasably, on the valve body 1a, and can also itself retain the pipe 2, in a manner secured to the valve unit and gas-tight, as will become clear from the following description.

More particularly, the retaining element 11 is formed as a clip made of metal sheet, for example of harmonic steel, which has a preferred forked shape with two opposed arms 12, 13 connected to each other at one end by a linking portion 14.

In the arm 12, a pair of opposed branches 12a, 12b are defined, extending substantially parallel to each other and also spaced apart. They are also connected at their free ends, on the side remote from the linking portion 14, by a connecting crosspiece 15.

Similarly, in the arm 13 a pair of branches 13a, 13b are defined, extending substantially parallel and spaced apart from each other. The reference 16 indicates a corresponding connecting crosspiece for the branches 13a, 13b. It should be noted that the arms 12, 13 are shaped as mirror-images of each other with respect to a central median plane of symmetry, passing perpendicularly to the upper flat linking portion 14 of the clip.

In each of the branches 12a, 13a, which are diametrally opposed with respect to the direction X in the stage of connection of the clip to the valve body, a respective central portion 12c, 13c with curved profile is defined, the radius of curvature of which is selected such that the portions are in abutment against the shoulder 5 of the groove 5, as a result of the connection of the clip to the valve body. Similarly, in each of the branches 12b, 13b, which are also diametrally opposed, a respective central portion 12d, 13d with curved profile is defined, the radius of curvature of which is selected such that the portions are in abutment against the shoulder 8 of the pipe 2, as a result of the connection of the clip to the valve body.

Further indicated by 15a, 16a are the respective through openings which are defined in the arms 12, 13, by the continuous peripheral profile delimited by the opposed branches and by the connecting portions of same.

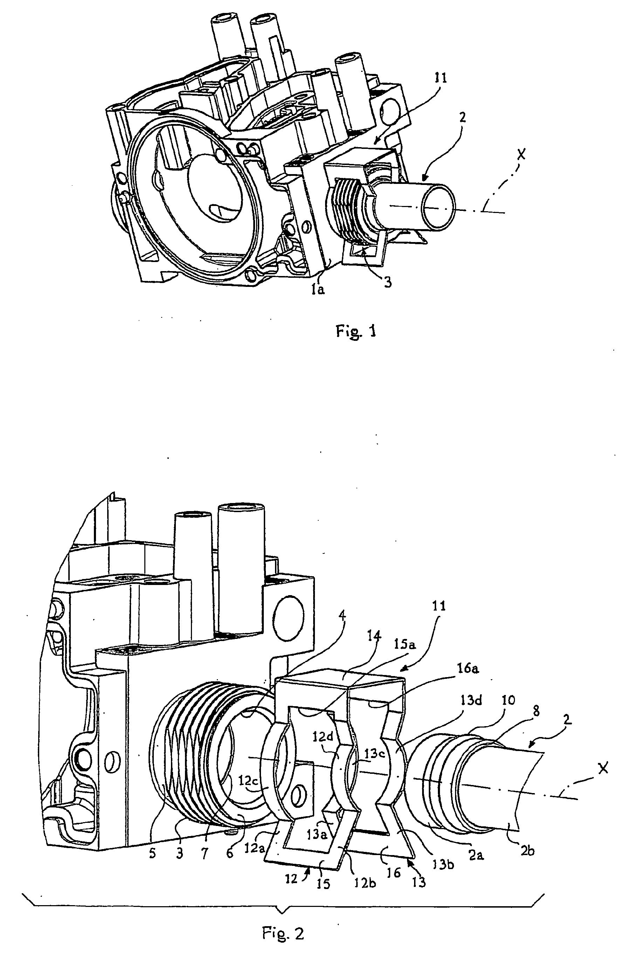

Provision is also made for the ends of the arms 12 and 13, on the side remote from the upper linking portion 14, to be bent back to diverge from each other, as illustrated in Figure 2, so as to facilitate the step of connection and disconnection of the clip to and from the valve body.

The connection system of the invention provides that, starting from the position of Figure 2, with the parts disengaged, with mutual axial spacing, the pipe 2 is inserted with its portion 2a into the cylindrical axial cavity 4 of the valve body. The insertion is completed when the free end of the pipe is in abutment against the internal shoulder 7. In this position the sealing ring 10 is in contact with the cylindrical surface of the cylindrical cavity 4, ensuring, by means of appropriate choice of dimensions, the gas-tight seal between the coupled cylindrical surfaces.

When the axial engagement position is completed, the clip element 11, in a movement transverse to the axis X, is fitted onto the attachment 3, with prior resilient opening out of the arms 12 and 13 (as a result of the interference encountered through the presence of the cylindrical threaded portion of the attachment itself). The movement transverse to the axis X is completed when the portions 12c, 13c of the clip are engaged in the groove 5, engaging in abutment against the shoulder 5a. At the same time, the portions 12d, 13d are caused to engage the outer surface of the pipe by abutting against the shoulder 8. The action of opposed abutment between the shoulders 5a and 8, owing to the axial rigidity of the clip (with an appropriate predefined axial distance between the branches of the arms which act on the same side), ensures the axial retention of the pipe relative to the valve body 1a, completing the leaktight connection between same.

In order to disconnect the pipe 2 from the valve unit, it is sufficient to disconnect the resilient clip, by means of a reverse transverse movement, until the arms are disengaged from the respective coupled surfaces. The resilience of the arms themselves permits the resilient opening out necessary for the withdrawal of the clip away from the operative connection position described above.

It should be noted that the presence of the openings 15a, 16a in the respective arms of the clip 11 allows it to be fitted onto the threaded portion of the attachment, without interfering with the attachment itself. As a result, the system lends itself advantageously to being employed in valve units provided with threaded male attachments, of the type described, the threads of which are intended to be engaged by pipe-fixing ring-nuts, whenever a conventional type of leaktight connection is opted for, which can be provided as an alternative to the connection system of the invention, the two systems being thus able to co-exist and be employed as an alternative to each other for the same valve unit, and in dependence on the different type of pipe selected for connection to the valve unit, all of which widens the possibilities of connection provided in the stage of constructional installation of the valve unit with the corresponding pipes.

Figure 6 illustrates schematically a conventional type of connection in which the valve unit 1 described above is connected in a leaktight manner to a pipe 2' which has a frontal annular end edge 20 which can be surface connected, by superposition, to the front surface 6 of the attachment. For leaktight clamping of the surfaces in contact, a respective pipe-fixing ring-nut or nut 25 is provided, fitted onto the corresponding pipe and including an internally threaded cylindrical seat 25a, the nutscrew of which can be engaged by screwing on the corresponding threaded portion of the attachment 4. The screwing action effects the axial clamping between the surfaces 6 and 20 in mutual contact.

An optional sealing ring 31 may be interposed between the aforesaid surfaces in order to ensure gas-tightness between the coupled parts.

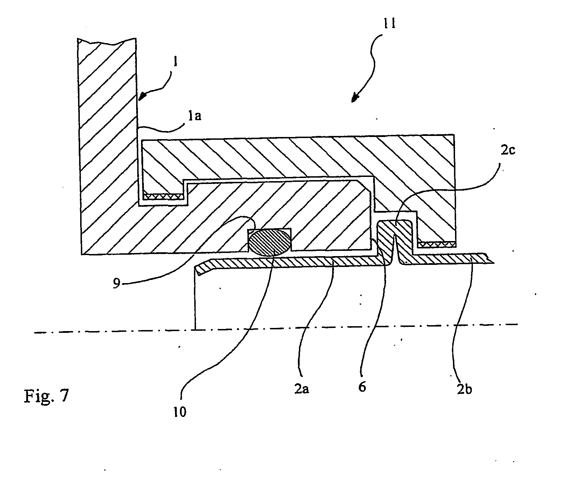

Figure 7 (for axial symmetry only half a section is shown) illustrates an alternative embodiment of the invention, in which details analogous to those of the example of Figure 5 are designated by the same reference numerals. This variant differs principally in that the sealing ring 10, of the O-ring type, is pre-mounted in the axial cavity 4 of the valve body 1a, for example housed in a suitable seat formed in the cylindrical wall of the cavity. This permits simpler execution of the portion 2a of pipe 2, as is clearly shown in Figure 6. Said pipe conveniently has a pinch 2c protruding circumferentially and which defines a circumferential raised portion which can abut between the front surface 6 of the attachment and the portions 12d, 13d of the clip, thus effecting the axial clamping of the pipe 2.

It is also to be understood that the retaining element may assume a different shape from that previously described, but in any case such as to have at least a first and a second surface portion, spaced apart from each other axially and which can also abut against the shoulders 5a and 8 so as to secure and axially restrain the parts coupled to each other. It is also understood that the clip may be of a different material and shape, but still within the same inventive concept which is the basis of the system claimed.

The invention thus achieves the aims proposed, obtaining the advantages mentioned above compared with the known solutions.

## Claims

1. A system for the leaktight connection of a valve unit (1) to a respective pipe (2), in particular for combustible gases, in which the valve unit comprises a gas through-flow section which can be connected, with flow communication, to a respective end section of the pipe, a threaded male attachment element (3) being formed integrally with the valve unit and having an axial through cavity (4) defining the gas through-flow section, the attachment element (3) comprising, at its free end, an annular surface connectible to a respective first type of pipe end (2), clamping with optional gas-tightness between the coupling surfaces being achievable by pipe-fixing ring-nut means which can be screwed onto the male threaded portion of the attachment element, **characterized in that** the system comprises second leaktight connection means which can be put into operation as an alternative to the ring-nut connection means that can be screwed onto the male attachment element, for the connection of the valve unit to at least one second type of pipe end, the second connection means comprising:
- at least one first shoulder surface (5a) which is provided in the region of that axial end of the male attachment element (3) which extends at the end longitudinally remote from the free end thereof,
- at least one second shoulder surface (8) provided on the outer surface of the pipe (2), the second shoulder being defined between a first portion (2a) of the pipe that can be engaged in the central cavity of the male attachment and a second portion (2b) which projects out of the cavity when the pipe is housed therein,
- at least one third shoulder surface (7) which is formed in the inner surface of the cavity (4) extending axially through the male attachment element (3) and which the free end of the pipe (2) can abut when the pipe is housed in the cavity (4), in a corresponding operative engagement position,
- at least one axial retaining element (11) which can be restrained releasably on the valve unit (1) in the region of the threaded portion of the male attachment element (3), the retaining element comprising at least one first surface portion and one second surface portion which are spaced apart axially and can abut the first and second shoulder surfaces (5a, 8), respectively, in the operative position of the pipe, as a result of the coupling of the retaining element with the valve unit in a manner such that the pipe (2) is restrained axially relative to the valve unit, against release from the operative position,
- gastight means being provided between the outer surface of the first portion (2a) of pipe and the surface of the cavity (4) which extends through the attachment element (3) and can house the pipe.

2. A connection system according to Claim 1 in which the first shoulder surface (5a) is defined in a groove (5) extending around at least a circumferential portion of the outer surface of the male attachment element (3) in a position between the body (1a) of the valve unit and the threaded portion of the element (3).

3. A connection system according to Claim 2 in which the retaining element (11) is formed as a resilient clip, the first surface portion including a first pair of branches (12c, 13c) of the clip which can engage the groove (5) on diametrally opposed sides thereof, the second surface portion comprising a second pair of branches (12d, 13d) of the clip which can abut the second shoulder surface (8) on diametrally opposed sides of the outer surface of the pipe.

4. A connection system according to Claim 3 in which the first pair of branches of the clip are connected to the second pair of branches by at least one linking portion (14) which extends axially when the clip is mounted in the operative position on the valve unit but which is of a size such as to extend around the threaded portion of the male attachment element (3) without any interference.

5. A connection system according to Claim 4 in which each branch (12c, 13c) of the first pair and each corresponding branch (12d, 13d) of the second pair that is positioned on the same side of the attachment element (3) are spaced apart axially, the spacing being selected such that, when the clip is mounted on the valve unit, the branches do not interfere with the threaded portion of the attachment element since they are positioned at the opposite axial ends thereof, without any interference.

6. A connection system according to Claim 5 in which each branch of the first pair is connected to the corresponding branch of the second pair that is disposed on the same side of the attachment element by a connection portion that extends between the ends of the branches remote from the ends that are located in the region of the linking portion (14).

7. A connection system according to any one of Claims 3 to 6 in which the branches of each pair have a shape with a predominantly curved profile corresponding to the profile of the outer surface of the male attachment element (3), with radii of curvature such as to engage in abutment with the first and second shoulder surfaces (5a, 8), respectively.

8. A connection system according to any one of Claims 3 to 7 in which the clip is movable away from and towards the operative position transversely relative to the principal axis of the male attachment element (3), the branches of each first and second pair being capable of being opened out resiliently, radially away from and towards the operative position in which the pipe (2) is clamped axially relative to the valve unit (1).

9. A connection system according to Claim 1 in which the gastight means comprise at least one sealing ring (10) which is housed in a circumferential seat (9) of the first portion of the pipe (2) and which can contact the cylindrical internal surface of the central cavity (4) provided in the attachment element (3) for the engagement of the pipe, that contact ensuring gas-tightness between the surfaces that are mutually engaged in the engagement of the pipe (2) with the valve unit (1).

## Patentansprüche

1. System zur dichten Verbindung einer Ventileinheit (1) mit einem zugehörigen Rohr (2), insbesondere für brennbare Gase, bei dem die Ventileinheit einen Gasdurchflussabschnitt umfasst, der in Strömungskommunikation mit einem zugehörigen Endabschnitt des Rohrs verbunden werden kann, wobei ein mit Gewinde versehenes männliches Anschlusselement (3) integral mit der Ventileinheit ausgebildet ist und einen axialen durchgehenden Hohlraum (4) aufweist, der den Gasdurchflussabschnitt definiert, wobei das Anschlusselement (3) an seinem freien Ende eine ringförmige Fläche umfasst, die mit einem zugehörigen ersten Typ von Rohrende (2) verbindbar ist, wobei ein Verspannen mit optionaler Gasdichtigkeit zwischen den Kopplungsflächen durch rohrfixierende Gewinderingmittel erreichbar ist, die auf den mit Gewinde versehenen männlichen Teil des Anschlusselements aufgeschraubt werden können, **dadurch gekennzeichnet, dass**
das System zweite dichte Verbindungsmittel umfasst, die als Alternative zu den Gewinderingverbindungsmitteln in Einsatz gebracht werden können, die auf das männliche Anschlusselement aufgeschraubt werden können, um die Ventileinheit mit mindestens einem zweiten Typ von Rohrende zu verbinden, wobei die zweiten Verbindungsmittel umfassen:
- mindestens eine erste Schulterfläche (5a), die im Bereich desjenigen axialen Endes des männlichen Anschlusselements (3) vorgesehen ist, das sich an dem in Längsrichtung von seinem freien Ende entfernt liegenden Ende erstreckt,
- mindestens eine zweite Schulterfläche (8), die auf der Außenfläche des Rohrs (2) vorgesehen ist, wobei die zweite Schulter zwischen einem ersten Abschnitt (2a) des Rohrs, der in den mittleren Hohlraum des männlichen Anschlusses eingreifen kann, und einem zweiten Abschnitt (2b) definiert ist, der aus dem Hohlraum herausragt, wenn das Rohr darin aufgenommen ist,
- mindestens eine dritte Schulterfläche (7), die an der Innenfläche des Hohlraums (4) ausgebildet ist, der sich axial durch das männliche Anschlusselement (3) erstreckt und an die das freie Ende des Rohrs (2) anliegen kann, wenn in einer entsprechenden operativen Eingriffposition das Rohr in dem Hohlraum (4) aufgenommen ist,
- mindestens ein axiales Halteelement (11), das lösbar an der Ventileinheit (1) im Bereich des Gewindeabschnitts des männlichen Anschlusselements (3) gehalten werden kann, wobei das Halteelement mindestens einen ersten Flächenabschnitt und einen zweiten Flächenabschnitt umfasst, die axial voneinander beabstandet sind und in der operativen Position des Rohrs als Folge der Kopplung des Halteelements mit der Ventileinheit in der Weise an der ersten bzw. der zweiten Schulterfläche (5a, 8) anliegen können, dass das Rohr (2) axial zur Ventileinheit gehalten ist, um eine Lösung aus der operativen Position zu verhindern,
- wobei Gasdichtungsmittel zwischen der Außenfläche des ersten Abschnitts (2a) des Rohrs und der Fläche des Hohlraums (4) vorgesehen sind, der sich durch das Anschlusselement (3) erstreckt und das Rohr aufnehmen kann.

2. Verbindungssystem nach Anspruch 1, bei dem die erste Schulterfläche (5a) in einer Vertiefung (5) definiert ist, die sich um mindestens einen Umfangsteil der Außenfläche des männlichen Anschlusselements (3) in einer Position zwischen dem Körper (1a) der Ventileinheit und dem Gewindeabschnitt des Elements (3) erstreckt.

3. Verbindungssystem nach Anspruch 2, bei dem das Halteelement (11) als federnde Schelle ausgebildet ist, wobei der erste Flächenabschnitt ein erstes Paar Stege (12c, 13c) der Schelle aufweist, die in der Vertiefung (5) an ihren diametral gegenüberliegenden Seiten eingreifen können, wobei der zweite Flächenabschnitt ein zweites Paar Stege (12d, 13d) der Schelle aufweist, die an der zweiten Schulterfläche (8) an diametral gegenüberliegenden Seiten der Außenfläche des Rohrs anliegen können.

4. Verbindungssystem nach Anspruch 3, bei dem das erste Paar Stege der Schelle mit dem zweiten Paar Stege durch mindestens einen Verbrückungsteil (14) verbunden ist, der sich axial erstreckt, wenn die Schelle in der operativen Position an der Ventileinheit angebracht ist, der aber eine Größe derart aufweist, dass er sich ohne Beeinträchtigung um den Gewindeabschnitt des männlichen Anschlusselements (3) erstreckt.

5. Verbindungssystem nach Anspruch 4, bei dem jeder Steg (12c, 13c) des ersten Paars und jeder zugehörige Steg (12d, 13d) des zweiten Paars, der auf der gleichen Seite des Anschlusselements (3) positioniert ist, axial beabstandet sind, wobei der Abstand derart gewählt ist, dass wenn die Schelle an der Ventileinheit angebracht ist, die Stege auf den Gewindeabschnitt des Anschlusselements nicht störend einwirken, da sie ohne Beeinträchtigung an seinen gegenüberliegenden axialen Enden positioniert sind.

6. Verbindungssystem nach Anspruch 5, bei dem jeder Steg des ersten Paars mit dem zugehörigen Steg des zweiten Paars, das auf der gleichen Seite des Anschlusselements angeordnet ist, durch einen Verbindungsabschnitt verbunden ist, der sich zwischen den Enden der Stege entfernt von den Enden erstreckt, die im Bereich des Verbrückungsteils (14) gelegen sind.

7. Verbindungssystem nach einem der Ansprüche 3 bis 6, bei dem die Stege jedes Paars eine Form mit einem überwiegend gekrümmten Profil aufweisen, das mit dem Profil der Außenfläche des männlichen Anschlusselements (3) korrespondiert, wobei Krümmungsradien derart ausgebildet sind, dass ein Anliegen an der ersten bzw. zweiten Schulterfläche (5a, 8) erreicht wird.

8. Verbindungssystem nach einem der Ansprüche 3 bis 7, bei dem die Schelle von der operativen Position weg und zu ihr hin quer zur Hauptachse des männlichen Anschlusselements (3) versetzbar ist, wobei die Stege des ersten und des zweiten Paars dazu ausgebildet sind, dass sie radial von der operativen Position weg und zu ihr hin, in der das Rohr (2) axial zur Ventileinheit (1) verspannt ist, federnd geöffnet werden können.

9. Verbindungssystem nach Anspruch 1, bei dem die Gasdichtungsmittel mindestens einen Dichtungsring (10) umfassen, der in einem umlaufenden Sitz (9) des ersten Abschnitts des Rohrs (2) untergebracht ist und der mit der zylindrischen Innenfläche des mittleren Hohlraums (4) in Kontakt kommen kann, der im Anschlusselement (3) zum Eingriff des Rohrs vorgesehen ist, wobei dieser Kontakt eine Gasdichtigkeit zwischen den Flächen gewährleistet, die beim Eingriff des Rohrs (2) mit der Ventileinheit (1) miteinander in Eingriff sind.

## Revendications

1. Système pour le raccordement étanche d'un ensemble de vanne (1) à un tuyau (2) respectif, en particulier pour des gaz combustibles, dans lequel l'ensemble de vanne comprend une section d'écoulement de gaz qui peut être raccordée, en communication d'écoulement, à une section d'extrémité respective du tuyau, un élément de fixation mâle fileté (3) étant formé de manière solidaire avec l'ensemble de vanne et ayant une cavité de passage axiale (4) définissant la section d'écoulement de gaz, l'élément de fixation (3) comprenant, au niveau de son extrémité libre, une surface annulaire pouvant être raccordée à un premier type respectif d'extrémité de tuyau (2), le serrage avec l'étanchéité au gaz facultative entre les surfaces de couplage pouvant être obtenu par des moyens d'écrou à oeillet de fixation de tuyau qui peuvent être vissés sur la partie filetée mâle de l'élément de fixation, **caractérisé en ce que** le système comprend des deuxièmes moyens de raccordement étanches qui peuvent être mis en oeuvre à titre de variante aux moyens de raccordement par écrou à oeillet qui peuvent être vissés sur l'élément de fixation mâle, pour le raccordement de l'ensemble de vanne à au moins un second type d'extrémité de tuyau, les seconds moyens de raccordement comprenant :
au moins une première surface d'épaulement (5a) qui est prévue dans la région de l'extrémité axiale de l'élément de fixation mâle (3) qui s'étend à l'extrémité longitudinalement à distance de son extrémité libre,
au moins une deuxième surface d'épaulement (8) prévue sur la surface externe du tuyau (2), le second épaulement étant défini entre une première partie (2a) du tuyau qui peut être mise en prise dans la cavité centrale de la fixation mâle et une seconde partie (2b) qui fait saillie hors de la cavité lorsque le tuyau y est logé,
au moins une troisième surface d'épaulement (7) qui est formée dans la surface interne de la cavité (4) s'étendant axialement à travers l'élément de fixation mâle (3) et laquelle extrémité libre du tuyau (2) peut venir en butée lorsque le tuyau est logé dans la cavité (4), dans une position de mise en prise opérationnelle correspondante,
au moins un élément de retenue axial (11) qui peut être retenu de manière amovible sur l'ensemble de vanne (1) dans la région de la partie filetée de l'élément de fixation mâle (3), l'élément de retenue comprenant au moins une première partie de surface et une deuxième partie de surface qui sont espacées axialement et peuvent venir en butée contre les première et deuxième surfaces d'épaulement (5a, 8) respectivement, dans la position opérationnelle du tuyau, en raison du couplage de l'élément de retenue avec l'ensemble de vanne de sorte que l'on empêche le tuyau (2) de sortir axialement de la position opérationnelle par rapport à l'ensemble de vanne,
des moyens étanches au gaz étant prévus entre la surface externe de la première partie (2a) du tuyau et la surface de la cavité (4) qui s'étend à travers l'élément de fixation (3) et peut loger le tuyau.

2. Système de raccordement selon la revendication 1, dans lequel la première surface d'épaulement (5a) est définie dans une rainure (5) s'étendant autour d'au moins une partie circonférentielle de la surface externe de l'élément de fixation mâle (3) dans une position entre le corps (1a) de l'ensemble de vanne et la partie filetée de l'élément (3).

3. Système de raccordement selon la revendication 2, dans lequel l'élément de retenue (11) est formé comme un collier de serrage élastique, la première partie de surface comprenant une première paire de branches (12c, 13c) du collier de serrage qui peuvent mettre en prise la rainure (5) sur ses côtés diamétralement opposés, la seconde partie de surface comprenant une seconde paire de branches (12d, 13d) du collier de serrage qui peuvent venir en butée contre la deuxième surface d'épaulement (8) sur les côtés diamétralement opposés de la surface externe du tuyau.

4. Système de raccordement selon la revendication 3, dans lequel la première paire de branches du collier de serrage est raccordée à la deuxième paire de branches par au moins une partie de liaison (14) qui s'étend axialement lorsque le collier de serrage est monté dans la position opérationnelle sur l'ensemble de vanne mais qui a une taille afin de s'étendre autour de la partie filetée de l'élément de fixation mâle (3) sans interférence.

5. Système de raccordement selon la revendication 4, dans lequel chaque branche (12c, 13c) de la première paire et chaque branche (12d, 13d) correspondante de la deuxième paire qui est positionnée du même côté de l'élément de fixation (3) sont axialement espacées, l'espacement étant sélectionné de sorte que, lorsque le collier de serrage est monté sur l'ensemble de vanne, les branches n'interfèrent pas avec la partie filetée de l'élément de fixation étant donné qu'elles sont positionnées au niveau de ses extrémités axiales opposées, sans interférence.

6. Système de raccordement selon la revendication 5, dans lequel chaque branche de la première paire est raccordée à la branche correspondante de la deuxième paire qui est disposée du même côté de l'élément de fixation par la partie de raccordement qui s'étend entre les extrémités des branches à distance des extrémités qui sont positionnées dans la région de la partie de liaison (14).

7. Système de raccordement selon l'une quelconque des revendications 3 à 6, dans lequel les branches de chaque paire ont une forme avec un profil principalement incurvé correspondant au profil de la surface externe de l'élément de fixation mâle (3), avec des rayons de courbure afin de se mettre en prise en butée avec les première et deuxième surfaces d'épaulement (5a, 8) respectivement.

8. Système de raccordement selon l'une quelconque des revendications 3 à 7, dans lequel le collier de serrage est mobile à distance et vers la position opérationnelle transversalement par rapport à l'axe principal de l'élément de fixation mâle (3), les branches de chacune des première et seconde paires pouvant être ouvertes de manière élastique, radialement à distance et vers la position opérationnelle dans laquelle le tuyau (2) est bloqué axialement par rapport à l'ensemble de vanne (1).

9. Système de raccordement selon la revendication 1, dans lequel les moyens étanches au gaz comprennent au moins une bague d'étanchéité (10) qui est logée dans un siège circonférentiel (9) de la première partie de tuyau (2) et qui peut entrer en contact avec la surface interne cylindrique de la cavité centrale (4) prévue dans l'élément de fixation (3) pour la mise en prise du tuyau, ce contact garantissant l'étanchéité au gaz entre les surfaces qui sont mutuellement mises en prise dans la mise en prise du tuyau (2) avec l'ensemble de vanne (1).
